(19) Europäisches Patentamt
European Patent Office
Office européen des brevets

(11) **EP 2 602 425 A1**

(12) **EUROPEAN PATENT APPLICATION**
published in accordance with Art. 153(4) EPC

(43) Date of publication:
**12.06.2013 Bulletin 2013/24**

(51) Int Cl.:
**E21B 43/00** (2006.01)  **E21B 43/20** (2006.01)
**C22B 3/04** (2006.01)

(21) Application number: **11814094.6**

(22) Date of filing: **02.08.2011**

(86) International application number:
**PCT/CN2011/077901**

(87) International publication number:
**WO 2012/016511 (09.02.2012 Gazette 2012/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA**

(30) Priority: **03.08.2010 CN 201010247830**

(71) Applicant: **Jiangxi Rare Earth & Rare Metals Tungsten Group Holding Co., Ltd.**
**Nanchang, Jiangxi 330046 (CN)**

(72) Inventors:
• **TAN, Yaofeng**
  **Nanchang**
  **Jiangxi 330046 (CN)**
• **LIU, Yan**
  **Nanchang**
  **Jiangxi 330046 (CN)**

(74) Representative: **Mittler, Enrico et al**
  **Mittler & C. S.r.l.**
  **Viale Lombardia, 20**
  **20131 Milano (IT)**

(54) **PROCESS FOR IN-SITU LEACHING BY LIQUID INJECTION**

(57) A process for in-situ leaching of ion-adsorption rare earth by liquid injection comprises setting up a liquid injection network having liquid injection shallow wells and liquid injection deep wells distributed at intervals; during the liquid injection, a procedure is employed in which the liquid injection is carried out in the liquid injection shallow wells first, then in the liquid injection deep wells, and finally underscreen water injection is carried out in both the liquid injection shallow wells and the liquid injection deep wells together. This process has a high rare earth mineral leaching rate, is simple in operation, has a wide application range, and has outstanding effects in terms of environmental protection; at the same time it solves the problems of blind-area occurrence during mineral-leaching and poor slope stability during liquid injection, while enabling control of flow direction and flow rate of the mineral-leaching agent, and of the intensity of the liquid injection.

Fig. 2

EP 2 602 425 A1

**Description**

Field of the Invention

The present invention relates to a liquid injection process for in-situ leaching and extracting, in particular, ion-adsorption type rare earth, in the field of in-situ leaching and mining.

The terminology "pushing water" in this specification means that, after a "leaching agent" is inputted in the ore bearing mountain body and the "leaching" process is completed, an "industrial replacing liquid" controlled according to a certain proportion (solid to liquid ratio) is continuously inputted from "injection wells" to the mountain body. Under the effect of "pushing water", an "ion exchanged" rare earth is converged. The obtained rare earth and a partial of leaching liquid which has been inputted earlier and has completed the "ion exchange" or not, form the mother liquid containing the ion exchanged rare earth. In a word, while the leaching process is completed with a leaching agent, the liquid injection process is ended with "supernatant liquid" or clear water. The pushing water is used to replace or "squeeze out" the leaching liquid in the ore body, including the rare earth ion has been exchanged out or not from the ore body. The terminologies "nest like ore body", "convex-concave lens like ore body", and "stratiform like ore body" are used to visually describe the characteristics of the spatial distribution of ore body. It is possible to find in Internet that such a term as "nest like ore body" has been used in some theses. This term refers to that the spatial distribution of ore body is complicated, since there are multiple small ore bodies in a single ore bearing mountain.

Prior Art

In the prior art, an injection process in geotechnical engineering is mainly used in a static pressure. For the implementation of the static pressure injection, a hand-dug circular well is adopted as an injection well. Firstly, it is necessary to use such a tool as shovel to manually dig a circular injection well with a diameter of about 0.6-0.8m (in general cases, labor forces are needed in the construction of injection well), with a bottom at 0.5m under the ore-bearing formation, and with a well interval of 3m × 3m. In order to reduce the injection blind area, in a middle section between the circular wells, use shovel to excavate an injection well going through the ore bed with length × width = 0.5m×0.5m (or diameter of 0.5m). In the process of leaching and extracting, it is required to firstly input a leaching agent into the circular wells, and input the leaching agent into the injection wells reaching to the ore bed, so as to eliminate the blind area, and in the end input a pushing water into the wells until the ore blocks are completely dealt with.

The prior art has the following drawbacks. Firstly, the injection sequence is unreasonable. In the prior art, the main ore body is firstly injected into, and then the injection well to reach the ore bed is injected into, so as to eliminate any blind area. In such a case, the injection process may become useless, due to too low mother liquid concentration and long time to have the last mother liquid. Furthermore, the cost and time for processing every ore blocks are imperceptibly increased. Secondly, there exist massive little cracks resulted from history. These little cracks are certainly filled with the clay minerals, so the leaching agent fails to reach the position below these little cracks to exchange with rare earth ions, so the effect of rare earth leaching is reduced. Thirdly, due to the special mineralization mechanism of ion adsorption type rare earth, there is major different permeability in the vertical direction. As a result, in the process of liquid injection, it is very difficult to control the injection intensity in the practical horizontal direction. Furthermore, the ore soil structure and permeability are always different from one place to another, resulting in difficulties in the injection process, and slope stability becomes a problem, for example, landslide may easily occur, which is bad to keep the normal progress of production. Fourthly, in the prior art, it is difficult to coordinate with the liquid collection system, namely it is difficult to manually control the input quantity. Fifthly, it is difficult for the prior art to adapt to work in the complicated "nest like ore body" with poor permeability and in the ore body with high buried depth, so that the corresponding resources cannot be exploited through the in-situ leaching technology. Sixthly, it is difficult for the prior art to exercise effective control on the flow direction, flow rate and injection intensity of the leaching agent. In addition, after the exploitation of every ore blocks, much leaching agent and partial rare earth mother liquids are still retained in the mountain body. As time goes on, they slowly penetrate into underground water, leading to major environmental pollution.

Summary of the Invention

The object of the present invention is to provide a liquid injection process for in-situ leaching and extracting an ion adsorption type rare earth, in which with high rare earth leaching rate, the in-situ leaching and extracting process can reduce any residue of mother liquid in the ore body, and thus reduce environmental pollution; with high mother liquid concentration, unit consumption of mineral leaching agent is small; and with simple operation, wide application, and outstanding environmental protection effect, the present invention can cancel any blind area in mineral leaching and prevent any poor stability of side slope in the process of liquid injection, can control the flow direction and flow rate of the mineral leaching agent and the liquid injection intensity, and can coordinate between the injection system and the liquid recovery system, so that the present invention can be even used for in-situ leaching any deep buried ore body, any ore body with poor permeability, as well as the "nest like ore body".

Thus, the present invention provides a liquid injection process for in-situ leaching and extracting an ion adsorption type rare earth, characterized in that according to thickness variations in the ore body, the hydrological, environmental, and geological condition, as well as the layout of liquid recovery system, setting up a liquid injection network with liquid injection shallow wells and liquid injection deep wells distributed at a certain interval, wherein the injection shallow wells are mainly inputted in a static pressure, the injection deep wells are mainly inputted in a closed state and injected at moderate depth; if the permeability of the ore body is very good, the injection deep wells can no longer be closed before injection in pressure; in the procedure of injection, firstly input a leaching agent into the injection shallow wells and then input the leaching agent into the injection deep wells; and when the leaching is complete, jointly input a pushing water into the injection shallow wells and the injection deep wells.

In the present invention, according to the spatial distribution of ore body, the variation in the ore body thickness, the permeability of ore earth, as well as the engineering layout of the liquid recovery system, it is feasible to set up the injection network with an interval distribution of injection shallow wells and injection deep wells. According to the variation in the ore body thickness (mainly for the "nest like ore body") as well as the layout of the liquid recovery system, it is also feasible to set up the injection network alternatively provided with the injection shallow wells, the injection wells with moderate depths, and the injection deep wells.

Through the drainage pipes, the injection shallow wells and the injection deep wells are interconnected with the ball valve switches, the diversion conduits, and a main injection pipe, so as to form an injection pipeline system.

Generally, the interval between two adjacent injection wells in the injection network is 2.5×2.5m. If the ore earth is in medium coarse sand structure, the interval can be 3×3m. If the ore earth is mainly composed of clay and fine sand, the interval can be 2×2m.

The injection shallow well is with a diameter of 30-40cm and a bottom at 1-2 m below the ore-bearing formation, a PVC pipe with a diameter of 1-1.5 inch (3.3cm-5cm) is used to drain the leaching agent to the bottom of the injection shallow well, and anti-collapse treatment is provided to the injection shallow well which is inputted in a static pressure.

In construction of the injection shallow wells, a special Luoyang shovel is adopted as the construction tool. The Luoyang shovel is a cylinder made of a stainless steel tube with a length of 25-35cm, a diameter of 20-30cm, and a thickness of 1.5-3 mm, or a stainless steel sheet with the corresponding expended area and thickness. The bottom of such cylinder is welded with a saw blade type material with rigidity and toughness. With the Luoyang shovel, it does not need any person to enter into the injection well for construction.

The injection deep wells closed and injected in pressure has a diameter of about 10-12cm. A resource exploration tool (such as Luoyang Shovel) is used for its construction. The bottom of the deep wells is generally 4.5-5.5m over the liquid recovery engineering control surface, or the depth of the injection deep well may be determined according to the following equation:

the ore thickness at the injection deep well + (the depth of the engineering control surface at the injection deep well - the ore thickness at the injection deep well) × 55% ≤ the depth of the injection deep well ≤ the ore thickness at the extracting deep well + (the depth of the engineering control surface at the injection deep well - the ore thickness at the injection deep well) × 75%.

The depth of the deep well is determined according to the permeability of ore earth, that is to say, the less permeability of ore earth, the bigger value is the depth; while the better permeability, the smaller value is the depth. In a bird view, the deep wells should be approached to the liquid recovery roadway as much as possible.

The liquid injection, filling and closing of the injection deep well are as follows. For the purpose of injection, a PVC pipe with a diameter of 6-8centis (namely 2-3cm) is used to drain the leaching agent to the middle/lower part of the injection deep well. Adopt locally obtained fine sand or coarse sand or other materials with good permeability to fill the injection deep well. As for the filling amount, in principle, it is necessary to fill the injection deep well up to such a level that is corresponding to, or at the same level with, the bottom of the shallow well. If above suitable filing materials are no enough, the filling material can be filled up to a surface which is over the holes part of the PVC pipe for at least 1m, and the remaining space from said surface to the ore body surface should be compacted and filled with ore earth. Furthermore, use dilute cement and sand slurry to fill a layer of 20-30cm, so as to form a sealing layer. In case of poor permeability, the time of sealing can be properly adjusted. In case of good permeability, the filing and sealing may no longer be used.

The drainage pipe for the injection deep wells has a following structure: On the lower part of the drainage pipe, there are provided several holes at interval of 25-35cm, these holes are divided into several rows. The lower part of the drainage pipe with holes is provided with an anti-blocking treatment, so as to prevent the middle/lower part of the drainage pipe from being blocked. In case of good permeability, the lower part of the drainage pipe may also be not provided with holes, and directly provided with the anti-blocking treatment.

The depth of the injection wells with moderate depth is generally determined according to the equation: the depth of the injection well with moderate depth = (the depth of deep well - the depth of adjacent shallow well) / 2 + the depth of the adjacent shallow well).

In the more general cases, the depth of the injection wells with moderate depth can be determined according to the following equation:

the ore thickness at the injection well with moderate depth + (the depth of the engineering control surface at the injection well with moderate depth - the ore thickness at the injection well with moderate depth) $\times$ 40% $\leq$ the depth of the injection well with moderate depth $\leq$ the ore thickness at the injection well with moderate depth + (the depth of the engineering control surface at the injection well with moderate depth - the ore thickness at the injection well with moderate depth) $\times$ 60%.

In above equation, the depth of the injection wells with moderate depth is determined according to the permeability of ore earths, namely, the less permeability, the bigger value is, while the better permeability, the smaller value is. The injection wells with moderate depths are mainly used to deal with the in-situ leaching "nest like ore body". In the "nest like ore body", the injection wells with moderate depths are used to control the flow rate and flow direction of the leaching agent and the mother liquid in ore body in the process of the injection.

Preferably, the injection deep wells are in a closed state and are injected in pressure at a moderate depth, so as to form a closed injection pipeline system.

Preferably, in case of good permeability of ore earth, the injection deep wells are no longer closed and injected in pressure, but it is only necessary to provide the injection deep and shallow wells.

Preferably, the injection deep wells are filled with fine sand or coarse sand, and an injecting pressure is made at the moderate depth.

Preferably, when the injection shallow wells are injected in static pressure, to make the peak of the mother liquid in the ore body moves downwards to half depth of ore body in the injection deep wells, stop injecting to the injection shallow wells, and start to inject in a high pressure to the injection deep wells. When the leaching is over, inject the pushing water to the injection shallow wells and the injection deep wells at the same time, until the ore blocks are completely dealt with.

Preferably, for the injection deep wells, a PVC pipe with a diameter of 2-3cm is used as the drainage pipe and is directly inserted to the bottom of the deep wells. On the lower part of the drainage pipe, arrange several holes at an interval of 25-35cm, these holes are divided into several rows. The lower part of the drainage pipe is with holes where is provided with an anti-blocking treatment. If the permeability of ore formation is good enough, the lower part of the drainage pipe may also be not provided with holes, and the anti-blocking treatment can be directly provided at the pipe orifice on the lower part of the drainage pipe.

Preferably, the injection shallow wells are drained by using a PVC pipe with a diameter of 3.3cm-5cm, and are provided with anti-collapse treatment.

Preferably, the injection shallow wells are formed by means of a special Luoyang shovel, which is a cylinder made of a stainless steel tube with a length of 25-35cm, a diameter of 20-30cm, and a thickness of 1.5-3 mm, or a stainless steel sheet with a corresponding expended area and thickness. The bottom of such cylinder is welded to a saw blade type material with rigidity and toughness. The injection deep wells are excavated by using Luoyang shovel in a diameter of 10-12cm.

In the present invention, there are alternatively distributed injection deep wells and injection shallow wells, so that the leaching agent can effectively penetrate into the ore body. Some factors, such as the different permeability in the vertical direction of ore body, the little cracks in the ore body, lateral seepage, the capillary phenomenon in the ore body per se, and the surface tension of leaching agent, have bad influences on effectiveness of the leaching agent. The present invention may reduce these negative influences on the leaching agent, effectively prevent the leaching agent ions from being exchanged by the ore earth, to prevent the leaching agent from being wasted, so as to improve the leaching rate of rare earth, and reduce the residue of rare earth mother liquid in the ore earth, and thus reduce the environmental pollution. In one embodiment, the liquid level of the injection shallow well is 1m over the ore body (if the injection shallow well penetrates into the ore bed for 2m, the liquid level depth is 3m over the bottom of the injection shallow well). As firstly injecting the blind area, it is feasible to substantially eliminate any blind area. The present invention can equalize the injection intensity, shorten the distance between adjacent leaching positions and shorten time for obtaining the mother liquid, increase the pressure gradient from the injection shallow wells to the injection deep wells, and from the injection deep wells to the engineering control surface, increase the flow rate of the leaching agent, and increase the slope stability. By controlling the flow direction of the leaching agent and changing the leaching position of the leaching agent by means of the injection deep wells, the present invention can increase the mother liquid concentration of rare earth.

According to the present invention, it is feasible to manually control the injection intensity, which is no longer limited by specific hydrogeological condition. With even injection intensity in the horizontal direction, friendly application to every kinds of ore bodies, and simple operation, the present invention can be used for all ore bodies with poor permeability. In particular, the present invention can used for in-situ leaching ion adsorption type rare earth from the volcanic tuff type ore body, the ore earth with poor permeability, the "nest like ore body", and the deep buried ore body, which are generally regarded as difficult to be dealt with in the prior art.

According to the present invention, beneficial effects are that: 1) the leaching agent ions being exchanged by the ore earth are reduced and the waste of leaching agent is prevented, the rare earth leaching rate is improved, the residue of rare earth mother liquid in the ore earth is reduced, the environmental pollution is reduced, and the recovery rate of rare earth is increased; 2) firstly injecting to the blind area, so as to eliminate the leaching blind area; 3) the injection intensity is equalized, to increase the in-situ leaching slope stability; 4) the permeability of the ore earth can be manually changed; and through a simple operation to control the in-situ leaching ion adsorption type rare earth, the in-situ leaching process and technology can be widely used; 5) the mother liquid concentration in the process of leaching is increased.

The unit consumption of raw materials can be kept small, which is mainly embodied in the following three aspects. Firstly, the injection intensity is equalized, so that the leaching effect is more even, and the leaching agent is more active. Secondly, with the injection deep and shallow wells, it is feasible to reduce the residue of mother liquid in the ore earth, i.e., more mother liquid and more rare earth are recovered. Thirdly, since the flow rate of the leaching agent is accelerated, less leaching agent is exchanged by the other foreign ions; and since the injection intensity can be controlled and the communication with the liquid recovery system is improved, the recovery rate of mother liquid is increased.

Brief Description of Accompanying Drawings

Fig. 1 is a sectional view of mining area with injection wells according to the prior art;
Fig. 2 is a sectional view of mining area with injection shallow and deep wells according to the present invention;
Fig. 3 is a schematic view of the injection shallow well in Fig. 2;
Fig. 4 is a schematic view of the injection deep well in Fig. 2;
Fig. 5 is a structural view of the drainage pipe for the injection deep well in Fig. 2; and
Fig. 6 is a sectional schematic view of a tool for digging the injection shallow well.

In the above drawings, a reference number 1 is referred to a surface soil laver; a reference number 2 is referred to an ore body; a reference number 3 is referred to an injection well; a reference number 4 is referred to an engineering control surface; a reference number 5 is referred to an injection shallow well; a reference number 6 is referred to an injection deep well; a reference number 7 is referred to an anti-blocking material; a reference number 8 is referred to a drainage pipe with a diameter of 1-1.5inch (3.3cm-5cm); a reference number 9 is referred to a drainage pipe with a diameter of 6-8centis (2-3cm); a reference number 10 is referred to a part blocked by fine/coarse sand; a reference number 11 is referred to a sealing layer; a reference number 12 is referred to anti-blocking holes for the drainage pipe with a diameter of 6-8centis (2-3cm); a reference number 13 is referred to an anti-blocking binding part; a reference number 14 is referred to a stainless steel tube with rigidity and toughness, a stainless steel sheet, or a saw blade with a corresponding extended area and thickness; a reference number 15 is referred to a stainless steel tube; a reference number 16 is referred to a connecting part screw cap; and a reference number 17 is referred to a steel reinforcement for connecting the screw cap and the stainless steel tube.

Detailed Description of Preferred Embodiments

With reference to the accompanying drawings, the embodiments of the present invention are described as follows.

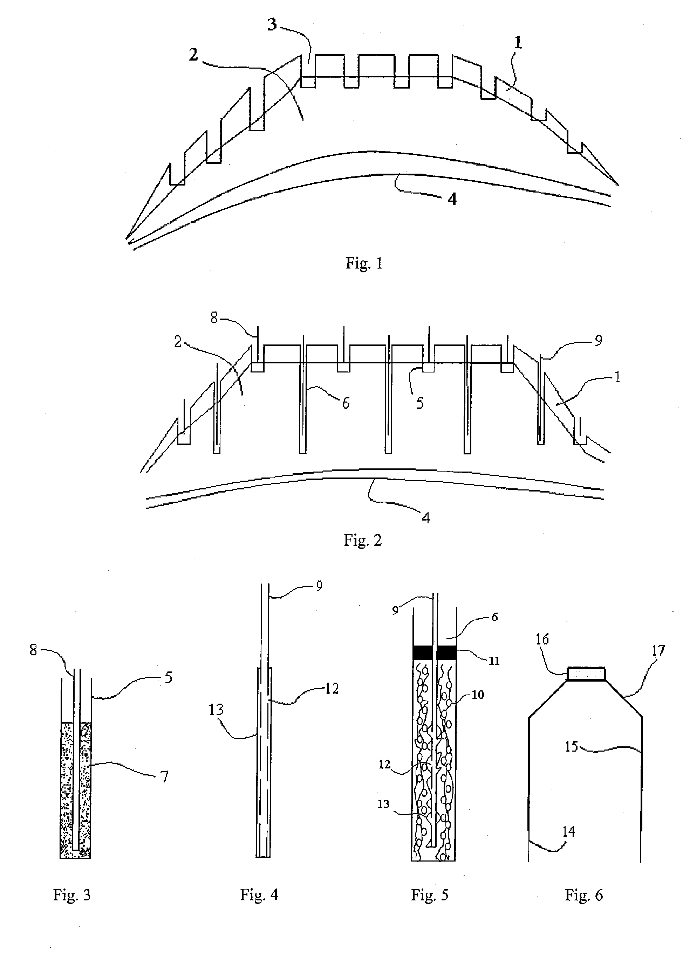

As shown in Fig. 2, according to the spatial distribution of ore body, the variation in the ore body thickness, the permeability of ore earth, as well as the engineering layout of the liquid recovery system, use a special Luoyang shovel to set up the static pressure injection shallow wells 5, and use a general Luoyang shovel to set up the closed and pressured injection deep wells 6, so as to form a liquid injection network of wells distributed at intervals; the general interval between the liquid injection wells is 2.5m × 2.5 m. However, if the ore earth is of medium or coarse sand, the interval can be 3m × 3 m; while, if the ore earth is mainly composed of clay and silt or powder, the interval can be 2m × 2 m. The shallow well 5 is configured to make its bottom 1-2m below the ore bed 2. The depth of the deep well 6 is related to the level of the liquid recovery engineering control surface 4, and is determined as described in the summary of the invention. A drainage pipe 9 is inserted to the bottom of the injection deep wells 6. The materials with good permeability, such as fine sand or coarse sand, are used to fill the injection deep wells, and a somewhat dilute cement paste or slurry is used to seal the deep wells 6, so as to perform a closed pressurization injection. The static pressure injection shallow wells 5 are interconnected with the drainage pipe, control switches, and diversion conduits of the closed pressurization injection deep wells 6, as well as the main injection pipeline system by means of PVC pipes.

In the injection process, it is required to firstly inject a blind area, namely the injection shallow wells 5 in the present invention. When the shallow wells 5 have been inputted to a certain extent (in principle, the method for calculating the total injection quantity for a single injection shallow well is as follows: the controlled area of shallow wells $\times$ the thickens of ore body part in the adjacent injection deep wells / 2 $\times$ percentage of saturated water content of ore earth), stop the injection to the injection shallow wells 5, but proceed to the injection to the injection deep wells 6. Open all the ball valve switches to input liquid in large quantity (required to make appropriate adjustment according to the injection engineering quality); when the leaching is enough and over, jointly input a pushing water to both the injection shallow wells 5 and the closed pressurization injection deep wells 6.

As shown in Fig. 2, use a special Luoyang shovel with a diameter of 20-30cm (see Fig. 6) to excavate a shallow well 5 with a diameter of 30-40cm, until a well bottom is 1-2m below from the ore-bearing formation. Excavated by means of a general Luoyang Shovel, the deep well 6 has a diameter of 10-12cm, with a deep well bottom which is arranged 5m above the liquid recovery engineering control surface. The deep wells 6 are arranged to approach the liquid recovery roadway as much as possible. The intervals between the injection wells are 2.5m $\times$ 2.5 m.

As shown in Fig. 3, firstly place a compact anti-blocking material 7 in thickness of about 20 cm in the lower part of the shallow well 5. Common materials, such as firewood, may be used as the anti-blocking material 7. To prevent the leaching liquid from scouring the well wall, place a PVC drainage pipe 8 with a diameter of 1-1.5 inch (namely about 3.3cm-5cm) in the central position of the shallow well 5, insert the anti-blocking material 7 to the periphery of the drainage pipe 8 and compact it. Place the hydrant on the PVC drainage pipe 8. The hydrant, the injection diversion conduits, and the main pipeline are interconnected. The PVC drainage pipe 8 is recoverable. The anti-blocking material 7 is used to prevent the shallow well 5 from collapse and to provide the penetration path for the leaching agent. In addition to prevent the leaching agent from scouring the well wall, the PVC drainage pipe 8 is also used to prevent such a dilemma that the top of the anti-blocking material 7 would be covered with slurry due to such factors as rainwater, resulting in failing to input liquid to ore earth. If the PVC drainage pipe 8 is blocked, it is merely necessary to shake the drainage pipe 8 and slightly pull it up.

As shown in Figs. 4 and 5, the deep well 6 is generally provided with a PVC drainage pipe 9 with a diameter of 6-8centis (1centi=1/8inch). On the lower part of the drainage pipe 9, for example, use an iron nail with a diameter of 4-5mm to set up holes 12 at an interval of about 30cm. These holes 12 are divided into four rows, each row including 2 holes (8 holes in total), and are evenly distributed on a 1.2-1.5m section of the PVC drainage pipe 9. It is relatively difficult to recover the PVC drainage pipe 9. The part of holes 12 of the PVC drainage pipe 9 is tied up by a snake skin bag made of ammonium sulfate, for example. The PVC drainage pipe 9 is then inserted into the deep well 6. Use locally obtained fine sand, coarse sand, or other materials with good permeability to fill the deep well 6 up to about just the same level as the bottom of the shallow well 5. Then, fill in a somewhat dilute sand-cement slurry for a thickness of 20-30cm, so as to form a sealing layer 11. When to make the sealing layer 11 is determined according to physical circumstances, such as the permeability of the ore earth. In case of poor permeability, it is feasible to carry out the construction of sealing layer 11 a week prior to stopping the injection to the shallow well 5. Finally, the ball valve switches, the injection diversion conduits, and the main pipeline are interconnected.

When the shallow wells 5 have been inputted to a certain extent (in principle, the method for calculating the total input quantity for a single injection well is as follows: the control area of shallow wells $\times$ the thickens of ore body part in the adjacent deep wells/2 $\times$ percentage of saturated water content of ore earth), stop the injection to the injection shallow wells 5, but proceed to input the injection deep wells 6. Open all the ball valve switches to input liquid in large quantity, when the leaching is finished, jointly input the pushing water to the injection shallow wells 5 and the closed pressurization injection deep wells 6.

The flow rate of leaching agent can be adjusted by changing the permeability of ore body itself and/or the pressure gradient. A method for changing the pressure gradient is to use the injection deep wells. If no injection deep well is provided, as there is ore earth around the ore body in the penetrating process, the pressure gradient is very small. However, with the implementation of the injection deep wells, the pressure at the injection deep wells is atmosphere (with respect to the process of the injection shallow wells). With the injection deep wells, since the pressure at engineering control surface becomes atmosphere, and the distance from the bottom of the injection deep wells to the engineering control surface is greatly shortened, the pressure gradient is changed accordingly. The flow direction of leaching agent is controlled by changing the pressure gradient. Therefore, this technology includes the control on the flow direction of the leaching agent.

**Claims**

1. A liquid injection process for in-situ leaching and extracting, in particular, ion-adsorption type rare earth, **characterized in that**, setting up a liquid injection network having liquid injection shallow wells and liquid injection deep wells alternatively distributed at an interval; in the procedure of the liquid injection process, firstly input a leaching agent into the injection shallow wells, then input the leaching agent into the injection deep wells, and in the end jointly input a pushing water into the injection shallow wells and the injection deep wells.

2. The liquid injection process of claim 1, **characterized in that**, additional liquid injection wells with moderate depth are also set in the liquid injection network.

3. The liquid injection process of claim 1, **characterized in that**, in the liquid injection network, any liquid injection shallow well is at interval of 2-3m $\times$ 2-3m to its neighbour liquid injection deep wells; when the ore earth is mainly composed of medium or coarse sand, a bigger interval is provided between one injection shallow well and one of its neighbour deep wells; while when the ore earth is mainly composed of clay minerals, a smaller interval is arranged between one injection shallow well and one of its neighbour deep wells.

4. The liquid injection process of claims 1 or 2, **characterized in that**, the injection shallow well is inputted with the leaching agent under static pressure, while the injection deep well is inputted with the leaching agent under a closed state and injected at moderate depth.

5. The liquid injection process of claim 1, **characterized in that**, a drainage pipe of the injection shallow wells and the injection deep wells, a corresponding ball valve switch, and a diversion conduit are interconnected with a main extracting pipeline, so as to form a liquid injection system.

6. The liquid injection process of claim 1, **characterized in that**, a diameter of the injection shallow well is 3-4 times as much as that of the injection deep well, and a diameter of the injection deep well is 10-12cm.

7. The liquid injection process of claim 1, **characterized in that**, the bottom of the injection shallow well is 1-2m below an ore-bearing formation, and the bottom of the injection deep well is 4.5-5.5m over or above the liquid recovery engineering control surface, or is determined according to the following equation:

   the ore thickness at the injection deep well + (the depth of the engineering control surface at the injection deep well - the ore thickness at the injection deep well) $\times$ 55% $\leq$ the depth of the injection deep well $\leq$ the ore thickness at the injection deep well + (the depth of the engineering control surface at the injection deep well - the ore thickness at the injection deep well) $\times$ 75%.

8. The liquid injection process of claim 7, **characterized in that**, when the ore earth is mainly composed of medium or coarse sand (i.e. when the ore earth is with a good permeability), the depth of the injection deep well is selected to be smaller in said calculation equation; while when the ore earth is mainly composed of clay minerals and/or silt (i.e. when the ore earth is with a poor permeability), the depth of the injection deep well is selected to be bigger in said calculation equation.

9. The liquid injection process of claim 2, **characterized in that**, the depth of the injection well with moderate depth is determined according to the following equation:

   the depth of the injection well with moderate depth = (the depth of the injection deep well - the depth of the adjacent injection shallow well) / 2 + the depth of the adjacent injection shallow well, or
   the depth of the injection well with moderate depth is determined according to the following equation:

   $$\text{the ore thickness at the injection well with moderate depth} + (\text{the depth}$$
   $$\text{of the engineering control surface at the injection well with moderate depth} -$$
   $$\text{the ore thickness at the injection well with moderate depth}) \times 40\% \leq \text{the}$$

depth of the injection well with moderate depth ≤ the ore thickness at the injection well with moderate depth + (the depth of the engineering control surface at the injection well with moderate depth - the ore thickness at the injection well with moderate depth) × 60%.

10. The liquid injection process of claim 9, **characterized in that**, when the ore earth is mainly composed of medium or coarse sand (i.e. when the ore earth is with a good permeability), the depth of the injection deep well with moderate depth is selected to be smaller in said calculation equation; while when the ore earth is mainly composed of clay minerals and/or silt (i.e. when the ore earth is with a poor permeability), the depth of the injection deep well with moderate depth is selected to be bigger in said calculation equation.

Fig. 1

Fig. 2

Fig. 3

Fig. 4

Fig. 5

Fig. 6

| **INTERNATIONAL SEARCH REPORT** | International application No. |
|---|---|
| | **PCT/CN2011/077901** |

**A.CLASSIFICATION OF SUBJECT MATTER**

See the extra sheet.
According to International Patent Classification (IPC) or to both national classification and IPC

**B.FIELDS SEARCHED**

Minimum documentation searched (classification system followed by classification symbols)
IPC: E21B, C22B

Documentation searched other than minimum documentation to the extent that such documents are included in the fields searched

Electronic data base consulted during the international search (name of data base and, where practicable, search terms used)
EPODOC, WPI, CNPAT, CNKI immerse, take, well, ion, ore, rare earth, shallow, soak+, extract+, well?

**C.DOCUMENTS CONSIDERED TO BE RELEVANT**

| Category* | Citation of document, with indication, where appropriate, of the relevant passages | Relevant to claims |
|---|---|---|
| PX | CN101915073A (JIANGXI RARE EARTH AND RARE METALS TUNGSTEN GROUP CO., LTD.) 15 December 2010 (15.12.2010), see claims 1-10. | 1-10 |
| PX | CN201802363U (JIANGXI RARE EARTH AND RARE METALS TUNGSTEN GROUP CO., LTD.) 20 April 2011 (20.04.2011), see claims 1-8. | 1-10 |
| A | CN1043768A (HUNAN LINGLING DISTRICT METALLURGICAL MINE MANAGEMENT STATION, HUNAN JIANGHUA YAO AUTONOMOUS COUNTY RARE EARTH MINE) 11 July 1990 (11.07.1990), see claim 1 and figures 2 to 3. | 1-10 |
| A | CN1401797A (JIANG XI SOUTH RARE EARTH HI-TECH CO., LTD.) 12 March 2003 (12.03.2003), the whole document. | 1-10 |
| A | US6276190B1 (Zamfes) 21 August 2001 (21.08.2001), the whole document. | 1-10 |
| A | JP11071111A (SAITO FUMIYOSHI; KYOGYO KUMIAI SENDAI SEISOU | 1-10 |

☐,✕ Further documents are listed in the continuation of Box C.  ☐,✕ See patent family annex.

| * Special categories of cited documents: | "T" later document published after the international filing date or priority date and not in conflict with the application but cited to understand the principle or theory underlying the invention |
|---|---|
| "A" document defining the general state of the prior art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 October 2011 (24.10.2011) | **10 November 2011 (10.11.2011)** |

| Name and mailing address of the ISA/CN: | Authorized officer |
|---|---|
| State Intellectual Property Office of the People's Republic of China | **LI, Jin** |
| No.6 Xituchenglu, Jimenqiao, Haidian District, Beijing, China 100088 | Telephone No.: (86-10)62085527 |
| Facsimile No.: (86-10)62019451 | |

Form PCT/ISA/210 (Page 2) (July 2009)

| INTERNATIONAL SEARCH REPORT | International application No. PCT/CN2011/077901 |
|---|---|

**C (Continuation). DOCUMENTS CONSIDERED TO BE RELEVANT**

| Category | Citation of document, with indication, where appropriate, of the relevant passages | Relevant to claims |
|---|---|---|
| A | KO) 16 March 1999 (16.03.1999), the whole document WO9010735A1 (MOLTECH INVENT SA [LU]) 20 September 1990 (20.09.1990) the whole document. | 1-10 |

Form PCT/ISA/210 (Continuation of Page 2) (July 2009)

| INTERNATIONAL SEARCH REPORT | | International application No. | |
|---|---|---|---|
| Information on patent family members | | **PCT/CN2011/077901** | |

| Patent Documents referred in the Report | Publication Date | Patent Family | Publication Date |
|---|---|---|---|
| CN101915073A | 15.12.2010 | None | |
| CN201802363U | 20.04.2011 | None | |
| CN1043768A | 11.07.1990 | None | |
| CN1401797A | 12.03.2003 | None | |
| US6276190B1 | 21.08.2001 | CA2236615AC | 30.10.1999 |
| JP11071111A | 16.03.1999 | None | |
| WO9010735A1 | 20.09.1990 | CA2030788A | 08.09.1990 |
| | | WO9010735A | 20.09.1990 |
| | | AU622000B | 26.03.1992 |
| | | EP0422142AB | 17.04.1991 |
| | | AT123079T | 15.06.1995 |
| | | ES2072427T | 16.07.1995 |
| | | DE69019664T | 21.09.1995 |

Form PCT/ISA/210 (Patent Family Annex) (July 2009)

**INTERNATIONAL SEARCH REPORT**

International application No.
**PCT/CN2011/077901**

**A. CLASSIFICATION OF SUBJECT MATTER**

E21B 43/00(2006.01)i
E21B 43/20(2006.01)i
C22B 3/04(2006.01)i

Form PCT/ISA/210 (Extra Sheet) (July 2009)